# EUROPEAN PATENT APPLICATION

(11) **EP 4 635 913 A1**
(43) Date of publication of application: **22.10.2025**
(21) Application number: 23903829.2
(22) Date of filing: 29.11.2023
(51) Int. Cl.: C01C 1/02

(54) **METHOD FOR RECOVERING AMMONIA**

(30) Priority: 16.12.2022 KR 20220176798
(71) Applicant: POSCO Co., Ltd, Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: JEONG, Cheon-Woo, Suncheon-si, Jeollanam-do 58006 (KR); CHO, Jung-Ho, Yongin-si, Gyeonggi-do 16939 (KR); RYOO, Ho-Geun, Seoul 05268 (KR); KIM, Joon-Woo, Suncheon-si, Jeollanam-do 58006 (KR)
(74) Representative: Nederlandsch Octrooibureau
(86) International application number: PCT/KR2023/019412
(87) International publication number: WO 2024/128626

(57) **Abstract**

The present invention provides a method for recovering ammonia, the method comprising: step S1 for providing a mixed gas including ammonia; step S2 for dissolving the ammonia in water; step S3 for degassing ammonia water in which the ammonia is dissolved, and thereby separating water and ammonia gas; and step S4 for purifying the degassed ammonia.

## Description

### Technical Field

The present disclosure relates to a method for recovering ammonia from a mixed gas. More specifically, the present disclosure relates to a method for recovering ammonia, including selectively separating ammonia from an intermediate material of a process including various materials (NH₃, H₂S, CO₂, H₂O, or the like) and recovering high purity ammonia of 90% or more, and also preventing formation of solid salts during the recovery process, thereby having high ammonia recovery efficiency.

### Background Art

Ammonia is a compound of nitrogen and hydrogen with a chemical formula NH₃. Since ammonia boils at -33.34°C (-28.012°F) at 1 atm, liquid ammonia may need to be stored in a high-pressure or low-temperature environment.

One of the commercial uses of ammonia may be as a process gas in manufacturing semiconductor materials. For example, ammonia may be used in epitaxial deposition of a semiconductor material in a process referred to as metal-organic chemical vapor deposition (MOCVD).

Among many gases used in the manufacturing of an LED using MOCVD, ammonia may be the most expensive material, which may be partly due to high purity required for an ammonia process gas. Since ammonia requires a high flow rate during a nitride crystal growth process, even a trace amount of impurities in gas may cause significant numbers of unwanted atoms to be included in a device. For example, when water (H₂O) or oxygen (O₂) molecules are present in ammonia gas, even at trace concentrations exceeding a several parts per billion (ppb) fraction, oxygen atoms may be included in a crystal structure of an LED device. Accordingly, a modern LED may be usually manufactured using ammonia including 1 ppb or less of water or oxygen.

Ammonia may also be used for a chemical reaction, one of which is as a NOx reducing agent in a selective catalytic reduction (SCR). SCR technology may be used as a technology to remove NOx generated by a combustion facility such as a power plant, which is a stationary source, or for a mobile source such as an automobile. In this case, urea water may be used as a reducing agent, and since the urea water may be decomposed at high temperatures and may be changed into ammonia, and may react with NOx, which may be the same technology.

Recently, as environmental issues increase, SCR facilities for removing NOx have increased, and accordingly, the amount of ammonia used has also increased, such that technology for supplying a large amount of high-purity ammonia may be necessary.

The technology for synthesizing and separating ammonia may generally include synthesizing H₂ from natural gas, reacting with nitrogen separated through air separation (ASU, air separation unit), synthesizing NH₃, and separating from the product. In most cases, the separation may be performed using a difference in boiling points between ammonia, hydrogen, and nitrogen.

However, the present disclosure may mainly focus on recovering NH₃ generated in high concentrations in the middle of an industrial process. Since it is difficult to recover ammonia directly in the prior art, ammonia may be burnt at high temperature and may be used as thermal energy. However, the present disclosure may provide a method and device for selectively separating ammonia from an intermediate material of a process including various materials.

In addition to ammonia, H₂S, CO₂, H₂O, or the like, may be included as intermediate materials in the process, and particularly, H₂S and CO₂ may be highly reactive with ammonia, such that H₂S and CO₂ may form salts when cooled at room temperature, which may cause line constriction. For this reason, in order to selectively separate ammonia, it may be necessary to control a boiling point difference and also the generation of solid salts.

Also, since NH₃, H₂S, CO₂ are materials having high solubility in water, a technology for selective separation may be necessary. Meanwhile, NH₃ may be dissolved in water up to about 30%, but the solubility of H₂S may be relatively low at 3g/L and the solubility of CO₂ may be 1.3g/L, and thus, high-purity NH₃ may be recovered using this solubility difference.

### [Prior art]

### [Patent Reference]

(Cited document 1) Korean Registered Patent Publication No. 1925612

### Detailed description of present disclosure

### Technical problems to solve

An aspect of the present disclosure is to provide a method for removing impurities other than ammonia from mixed gas and recovering high-purity ammonia.

### Solution to Problem

An aspect of the present disclosure provides an ammonia recovery device including facilities as below:

A mixed gas cooler 1; an ammonia absorption tower 2; an absorption liquid supply pump 3; an absorption liquid cooler 4; an absorption liquid degassing tower 5; a cooler 6 in a degassing tower; a reboiler 7 in the degassing tower; a cooler 8 on an upper end and a rear end of the degassing tower; a cooler 9 on a lower end and a rear end of the degassing tower; a first ammonia purification tower 10; a cooler 11 of the first ammonia purification tower; a reboiler 12 of the first ammonia purification tower; a second ammonia purification tower 13; a cooler 14 of the second ammonia purification tower; and a reboiler of a second ammonia purification tower 15.

Another aspect of the present disclosure provides a method for recovering ammonia including operation S1 of providing a mixed gas containing ammonia; operation S2 of dissolving ammonia in water; operation S3 of degassing ammonia water in which ammonia is dissolved and separating water and ammonia gas from each other; and operation S4 of purifying degassed ammonia.

### Advantageous Effects of Invention

According to an aspect of the present disclosure, a method for effectively recovering high-concentration ammonia by effectively removing hydrogen sulfide and carbon dioxide from mixed gas may be provided.

### Brief Description of Drawings

FIG. 1 is a diagram illustrating each component of an ammonia recovery device and a connection relationship therebetween according to the present disclosure;
FIG. 2 is a diagram illustrating a method for recovering ammonia, illustrating the flow of fluid streams ([A] to [S]) appearing during implementation of the method for recovering ammonia according to the present disclosure.

### Best Mode for Invention

Hereinafter, preferable embodiments of the present disclosure will be described with reference to the accompanied drawings. However, the embodiment of the present disclosure may be modified with various other forms, and the scope of the present disclosure is not limited to the embodiment described below. Also, embodiments of the present disclosure are provided to more fully describe the present disclosure to a person having average knowledge in the relevant technique field.

According to an aspect of the present disclosure, an ammonia recovery device including a facility as below may be provided:
A mixed gas cooler 1; an ammonia absorption tower 2; an absorption liquid supply pump 3; an absorption liquid cooler 4; an absorption liquid degassing tower 5; a cooler 6 of a degassing tower; a reboiler 7 of the degassing tower; a cooler 8 on an upper end and a rear end of the degassing tower; a cooler 9 on a lower end and a rear end of the degassing tower; a first ammonia purification tower 10; a cooler 11 of the first ammonia purification tower; a reboiler 12 of the first ammonia purification tower; a second ammonia purification tower 13; a cooler 14 of the second ammonia purification tower; and a reboiler of a second ammonia purification tower 15.

According to another aspect of the present disclosure, a method for recovering ammonia including step S1 of providing a mixed gas including ammonia; step S2 of dissolving ammonia in water; step S3 of degassing ammonia water in which ammonia is dissolved and separating water and ammonia gas from each other; and step S4 of purifying the degassed ammonia.

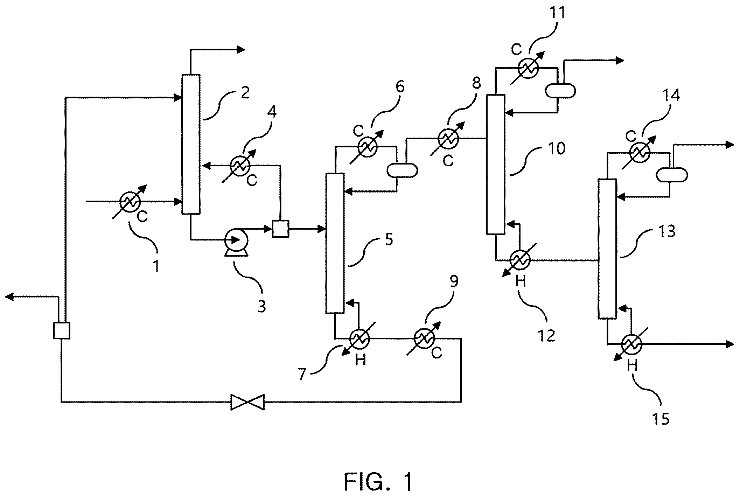

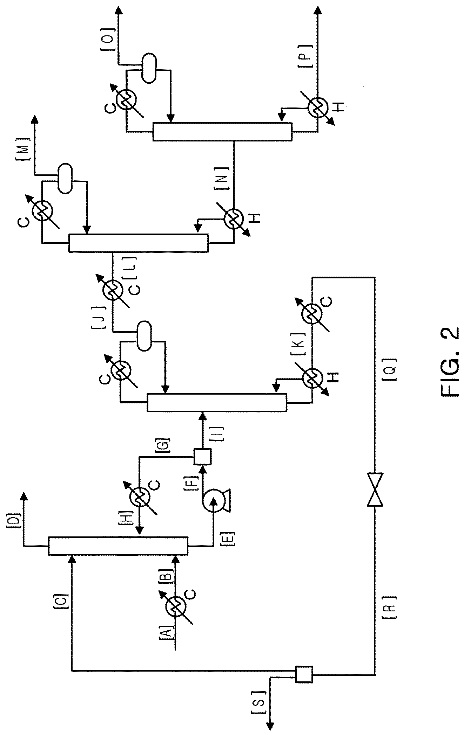

Hereinafter, each step of the method of the present disclosure may be described in greater detail with reference to FIGS. 1 and 2.

In step S1, a mixed gas including ammonia may be provided. The mixed gas may be cooled by a mixed gas cooler 1 to allow ammonia to be more easily dissolved in water in step S2 below.

For example, the mixed gas may be cooled from 5°C to 80°C, more preferably from 10°C to 40°C.

80°C or more may refer to using a process temperature as is without heat exchange, and when cooled to a temperature lower than 5°C, solid salts may be generated, which may cause difficulties in operation.

Step S2 may be a step of cooling and absorbing ammonia with water in the ammonia absorption tower 2 and generating ammonia water, and may include supplying water to the mixed gas and recovering ammonia included in the mixed gas. This ammonia recovery may be a method generally used in prior art, and ammonia water may be produced by absorbing ammonia by spraying a large amount of water into the mixed gas. For example, by spraying water into the mixed gas, the mixed gas may be separated into water absorbing ammonia and residual gas not dissolved in water. In this case, it may be preferable to spray the water countercurrently to the flow of the mixed gas.

High-concentration ammonia may be recovered from the ammonia water generated by step S2, and if desired, a portion of the generated ammonia water may be separated and may be used as an absorbent to remove acid gas from the COG.

Since dissolution reaction of ammonia in water may be an exothermic reaction (enthalpy change of ΔH° = -30.50 kJ/mol when dissolved in water at 25°C), cooled water may be supplied through the absorption liquid cooler 4 in step S2.

More specifically, the temperature of the sprayed water may be 5 to 45°C, and more preferably 10 to 40°C.

When the water temperature is less than 5°C, cooling water may need to be produced through a facility such as a chiller, which may increase the power cost required therefor. On the other hand, when the water temperature exceeds 45°C, as the temperature increases, the gas solubility may decrease, such that the amount of ammonia absorbed into the water may decrease.

In step S2, in addition to ammonia, hydrogen sulfide (H₂S) and carbon dioxide (CO₂) may be dissolved, and compared to ammonia, which may be dissolved at 30% at room temperature, hydrogen sulfide may have a solubility of 3g/L and carbon dioxide has a solubility of 1.3g/L, which are trace amounts, and thus, the materials may be purified in a subsequent distillation tower to remove impurities gases, and high-purity ammonia may be recovered.

The ammonia water generated in step S2 may be recovered to a lower end of the ammonia absorption tower 2, and impurities gases such as hydrogen sulfide (H₂S) and carbon dioxide (CO₂), which are not dissolved by the sprayed water, may be separated from the ammonia gas and may be discharged or captured through the upper end of the ammonia absorption tower 2.

In step S2, impurities such as hydrogen sulfide (H₂S) and carbon dioxide (CO₂) may be separated from ammonia gas at 99% or more of the initial impurities gas flow rate in step S1 and may be discharged or captured at the upper end of the ammonia absorption tower 2.

Step S3 may be a step of strip ammonia gas from ammonia water generated in step S2 through the absorption liquid degassing tower 5, and may be performed using a difference in boiling points between ammonia and water.

In step S3, ammonia water may be vaporized by heating by the reboiler 7 of the degassing tower, and the vaporized ammonia water may be cooled again by the cooler 6 of the degassing tower. In this case, as water is liquefied and recovered to a lower part due to the difference in boiling points between ammonia and water, degassing may occur.

In order to perform step S3, the internal temperature of the absorption liquid degassing tower 5 may be 100 to 200°C, more specifically, 110 to 170°C.

When the internal temperature of the absorption liquid degassing tower is less than 100°C, there may be a problem in that dissolved ammonia may not be sufficiently recovered, and in this case, when ammonia remains in the recirculated fluid, the absorption capacity may decrease, which may affect the absorption tower. On the other hand, when the internal temperature of the absorption liquid degassing tower 5 exceeds 200°C, ammonia and also water may be vaporized, which may cause a problem in that the degassing tower may not perform the function of recovering and separating ammonia from the solution.

Also, in this case, the pressure in the absorption liquid degassing tower 5 may be 1 kg/cm² to 20 kg/cm², and more specifically, 6 kg/cm² to 10 kg/cm².

When the internal pressure of the absorption liquid degassing tower is less than 1 kg/cm², as described above, due to the high internal temperature of the absorption liquid degassing tower 5, water may also be vaporized, and the degassing tower may not perform the function of recovering and separating ammonia from the solution. On the other hand, when the internal pressure exceeds 20 kg/cm², ammonia may need to be recovered at an excessively high temperature, the energy cost may increase.

The degassed ammonia may be captured at the upper end of the absorption liquid degassing tower 5, may be cooled by the cooler 8 at the upper end and the rear end of the degassing tower, and may be provided into the first ammonia purification tower 10. The ammonia may be cooled to 20 to 50°C by the cooler 8 on an upper end and a rear end of the degassing tower.

The water from which ammonia has been degassed may be recovered from the lower end of the absorption liquid degassing tower 5, may be cooled by the cooler 9 of a lower end and a rear end of the degassing tower, may be provided into the ammonia absorption tower 2, and may be reused to absorb ammonia in step S2.

Step S4 may be a step of purifying the degassed ammonia, and impurities gases such as residual carbon dioxide, hydrogen sulfide, and/or water vapor may be removed through step S4.

Step S4 is not limited to any particular example as long as the method may separate the residual impurities gas from ammonia. For example, step S4 may be performed by a membrane process, temperature swing adsorption, pressure swing adsorption, temperature and pressure swing adsorption or distillation, and more preferably by distillation.

More specifically, when step S4 is performed by distillation, the input ammonia gas may be separated from residual impurities gases such as carbon dioxide, hydrogen sulfide, and water vapor by vapor-liquid equilibrium at a specific temperature and pressure.

When step S4 is performed by distillation, the step may be performed by a purification tower, and a cooler may be provided on the upper end of the purification tower, a reboiler may be provided on the lower end, and a filler may be loaded therein.

In the purification tower, vapor-liquid equilibrium of ammonia may be formed at each stage formed by the filler, and in this case, ammonia gas and residual impurities gas may be separated from each other by a difference in boiling points and volatility of the mixed gas.

Step S4 may be performed by a plurality of steps.

More specifically, step S4 may include a primary purification step of removing residual carbon dioxide and sulfur dioxide gas from the ammonia gas degassed in step S3, and a secondary purification step of removing water or water vapor from the ammonia gas having undergone the primary purification step.

The primary purification step may include removing residual carbon dioxide and hydrogen sulfide using distillation, and the primary purification step may be performed by the first ammonia purification tower 10.

More specifically, the primary purification step may further include a step of cooling the input ammonia gas; a step of removing residual impurities gas in a gaseous state; and a step of re-heating the ammonia gas from which the residual impurities gas has been removed, and the steps may be performed intermittently or consecutively.

When the primary purification step is performed by distillation, the first ammonia purification tower 10 may further include the cooler 11 of the first ammonia purification tower and the reboiler 12 of the first ammonia purification tower.

The step of cooling the input ammonia gas may be performed by the cooler 11 of the first ammonia purification tower. The cooler 11 of the first ammonia purification tower may separate the ammonia gas from the input gas, by sending the ammonia gas to the lower end of the first ammonia purification tower 10.

Also, the step of re-heating the ammonia gas from which the residual impurities gas has been removed may be performed by the reboiler 12 of the first ammonia purification tower. The reboiler 12 of the first ammonia purification tower may separate CO₂, and H₂S from the input gas, by sending CO₂, and H₂S to the upper of the first ammonia purification tower 10.

When the primary purification step is performed, the ammonia gas may be cooled to 0°C to 5°C by the cooler 11 of the first ammonia purification tower, and more preferably, to 0°C to 3°C.

When the temperature of the ammonia gas cooled by the cooler 11 of the first ammonia purification tower is lower than 0°C, a problem in which a great deal of energy may be consumed in the cooling process may occur, which may increase the process cost, and on the other hand, when the temperature exceeds 5°C, ammonia is not sufficiently cooled, such that a problem in which the amount thereof recovered to a lower end portion may be reduced may occur.

Also, when the primary purification step is performed by distillation, the pressure in the first ammonia purification tower 10 may be 1 kg/cm² to 20 kg/cm², and more specifically, 3 kg/cm² to 10 kg/cm².

When the pressure in the first ammonia purification tower 10 is less than 1 kg/cm², a problem in which ammonia is discharged and lost to the upper end may occur, and on the other hand, when the pressure exceeds 20 kg/cm², a great deal of energy may be required to reboil the lower end portion of the distillation tower, which may degrade economic efficiency.

Ammonia gas may be heated to 6°C to 10°C by the reboiler 12 of the first ammonia purification tower.

In the process in which the input ammonia gas is cooled by the cooler 11 of the first ammonia purification tower and heated by the reboiler 12 of the first ammonia purification tower, ammonia having a relatively high boiling point may be recovered from the lower end of the first ammonia purification tower 10, and impurity gases such as CO₂ and H₂S having a relatively low boiling point may be separated and removed in a gaseous state at the upper end of the first ammonia purification tower 10.

The ammonia gas recovered from the first ammonia purification tower 10 may be input into the second ammonia purification tower to perform a secondary purification step. Water or water vapor remaining in the ammonia gas may be removed through the secondary purification step.

The secondary purification step is not limited to any particular example as long as the method may separate water remaining in the ammonia gas, but more preferably, the step may be performed by distillation.

More specifically, the secondary purification step may further include a step of cooling the input ammonia gas; a step of removing liquid-state residual water; and a step of re-heating the ammonia gas from which the residual water has been removed, and the step may be performed intermittently or consecutively.

When the secondary purification step is performed by distillation, the second ammonia purification tower 13 may further include a cooler 14 of the second ammonia purification tower and a reboiler 15 of the second ammonia purification tower.

Accordingly, the step of cooling the input ammonia gas may be performed by the cooler 14 of the second ammonia purification tower. The cooler 14 of the second ammonia purification tower may separate residual water or water vapor from the input gas of the second ammonia purification tower 13, by sending the water or water vapor to the lower end of the second ammonia purification tower 13.

Also, the step of re-heating the ammonia gas may be performed by the reboiler 15 of the second ammonia purification tower. The reboiler 15 of the second ammonia purification tower may separate the ammonia gas from the input gas of the second ammonia purification tower 13, by sending the ammonia gas to the upper end of the second ammonia purification tower 13.

When the secondary purification step is performed, the ammonia gas may be cooled to -35°C to 0°C by the cooler 14 of the second ammonia purification tower, and more preferably, to -10°C to -3°C.

When the temperature of the ammonia gas cooled by the cooler 14 of the second ammonia purification tower is less -35°C, the cooling process may consume a great deal of energy, which increases the process cost, and water may be overly cooled, such that ice may be formed, which may clog the pipes. On the other hand, when the temperature exceeds 0°C, the cooling may not be sufficiently performed to separate water from ammonia, such that impurities in the lower end portion may be oved insufficiently, and accordingly, ammonia of sufficient purity may not be recovered.

Also, when the secondary purification step is performed by distillation, pressure in the second ammonia purification tower 13 may be 1 kg/cm² to 20 kg/cm², and more specifically, 3 kg/cm² to 10 kg/cm².

When the pressure in the second ammonia purification tower 13 is less than 1 kg/cm2, the separation ratio with impurities other than ammonia may be low, ammonia purity may degrade, which may be problematic. On the other hand, when the pressure exceeds 20 kg/cm², a great deal of energy may be required to reboil the lower end portion of the distillation tower, which may degrade economic efficiency.

The temperature of ammonia gas may increase to 50°C to 100°C by the reboiler 15 of the second ammonia purification tower, and more preferably, to 55°C to 70°C.

In the process in which the input ammonia gas is cooled by the cooler 14 of the second ammonia purification tower and heated by the reboiler 15 of the second ammonia purification tower, ammonia having a relatively low boiling point may be recovered from the upper end of the second ammonia purification tower 13, and water having a relatively high boiling point may be separated and removed from the lower end of the second ammonia purification tower 13.

The ammonia gas purified through the secondary purification step may be cooled by the cooler 14 of the first ammonia purification tower and may be recovered and stored.

The purity of the ammonia purified, recovered and stored in an embodiment of the present disclosure may be 99.0% or more, more preferably 99.9% or more, and even more preferably 99.99% or more.

### Best Mode for Invention

### <Embodiment>

Hereinafter, embodiments of the present disclosure will be described. However, embodiments of the present disclosure may be modified in different forms, and the scope of the present disclosure is not limited to the embodiments described below.

FIG. 1 is a diagram illustrating each component of an ammonia recovery device and a connection relationship therebetween according to the present disclosure.

FIG. 2 is a diagram illustrating a method for recovering ammonia, illustrating the flow of fluid streams ([A] to [S]) appearing during implementation of the method for recovering ammonia according to the present disclosure.

Tables 1 and 2 below list the temperature and pressure of each fluid stream in the flow diagram in FIG. 2, and the components and content of gases identified in each stream. Streams A to S in Tables 1 and 2 may correspond to [A] to [S] in FIG. 2, respectively.

**[Table 1]**

| Stream | A | B | C | D | E | F | G | H | I | J |
|---|---|---|---|---|---|---|---|---|---|---|
| CO₂ (kg/h) | 3289.9 | 3289.9 | 0.0 | 3284.1 | 15.3 | 15.3 | 9.5 | 9.5 | 5.7 | 5.7 |
| H₂S (kg/h) | 1760.8 | 1760.8 | 0.0 | 1749.0 | 31.5 | 31.5 | 19.6 | 19.6 | 11.8 | 11.8 |
| NH₃ (kg/h) | 924.1 | 924.1 | 0.6 | 9.2 | 2435.9 | 2435.9 | 1520.4 | 1520.4 | 915.4 | 914.8 |
| H₂O (kg/h) | 1783.5 | 1783.5 | 21511. 9 | 276.2 | 61250. 8 | 61250. 8 | 38231. 6 | 38231. 6 | 23019. 2 | 2.8 |
| Temperature (°C) | 80.0 | 77.8 | 45.0 | 47.4 | 63.5 | 63.7 | 63.7 | 45.0 | 63.7 | 45.0 |
| Pressure (kg /cm²) | 1.25 | 1.25 | 2.5 | 1.05 | 1.1 | 8 | 8 | 8 | 8 | 7.4 |

**[Table 2]**

| Stream | K | L | M | N | O | P | Q | R | S |
|---|---|---|---|---|---|---|---|---|---|
| CO₂ (kg/h) | 0.0 | 5.7 | 5.7 | 0.0 | 0.0 | 0.0 | 0.0 | 0.0 | 0.0 |
| H₂S (kg/h) | 0.0 | 11.8 | 11.8 | 0.0 | 0.0 | 0.0 | 0.0 | 0.0 | 0.0 |
| NH₃ (kg/h) | 0.6 | 914.8 | 137.2 | 777.6 | 776.0 | 1.6 | 0.6 | 0.6 | 0.0 |
| H₂O (kg/h) | 23016. 3 | 2.8 | 0.0 | 2.8 | 0.0 | 2.8 | 23016. 3 | 23016. 3 | 1504.4 |
| Temperature (°C) | 167.3 | 19.4 | 2.6 | 7.2 | -5.8 | 60.8 | 45.0 | 45.0 | 45.0 |
| Pressure (k g/cm²) | 7.55 | 7.4 | 5 | 5.15 | 3.5 | 3.7 | 7.6 | 2.5 | 2.5 |

Referring to FIGS. 1, 2, Table 1 and Table 2, step S1 in which mixed gas including ammonia was precooled through mixed gas cooler 1 and provided into ammonia absorption tower 2 was performed.

In the ammonia absorption tower 2, step S2 in which water supplied through absorption liquid supply pump 3 was cooled by absorption liquid cooler 4 and provided into the ammonia absorption tower 2 to absorb ammonia was performed.

In step S2, it may be confirmed that most of the carbon dioxide and sulfur dioxide were separated into stream [D] without being dissolved in water.

In the ammonia absorption tower 2, water absorbing ammonia, that is, ammonia water, was provided into absorption liquid degassing tower 5 and step S3 in which ammonia gas was degassed from ammonia water was performed.

In this case, water liquefied by the cooler 6 of the degassing tower was cooled through coolers on the lower end and the rear end of the degassing tower, and was provided back into the ammonia absorption tower 2 and reused in step S2.

The degassed ammonia gas was cooled again by the cooler 8 on the upper end and the rear end of the degassing tower, and was provided into the first ammonia purification tower 10, and the primary purification step of step S4 was performed.

The primary purification step was performed by distillation, and accordingly, it was confirmed that carbon dioxide and sulfur dioxide gas partially dissolved in water in the step S2 were separated into stream [M].

The ammonia gas having gone through the primary purification step was provided into the second ammonia purification tower 13 and the secondary purification step was performed.

The secondary purification step was performed by distillation, and accordingly, it was confirmed that remaining water was partially separated into stream [P].

It was confirmed that ammonia purified through S1 to S4 steps was recovered into stream [O], and also that ammonia had a purity of 99.99% or more.

It was confirmed that, in the input mixed gas, carbon dioxide was removed at 99.8% (3284.1 kg/h) of the input flow rate (3289.9 kg/h), and that sulfur dioxide was separated and removed at 99.3% (1749.0 kg/h) of the input flow rate (1760.8 kg/h) into stream [4] in step S2.

Accordingly, in the case of the method of present disclosure, it may be confirmed that 99% or more of carbon dioxide and sulfur dioxide in the input mixed gas were separated and removed in step S2, such that the possibility that carbon dioxide and sulfur dioxide form salts and cause line constriction in the subsequent step was significantly reduced.

### [Reference numbers]

1: mixed gas cooler
2: ammonia absorption tower
3: absorption liquid supply pump
4: absorption liquid cooler
5: absorption liquid degassing tower
6: cooler of degassing tower
7: reboiler of degassing tower
8: cooler on upper end and rear end of degassing tower
9: cooler on lower end and rear end of degassing tower
10: first ammonia purification tower
11: cooler of first ammonia purification tower
12: reboiler of first ammonia purification tower
13: second ammonia purification tower
14: cooler of second ammonia purification tower
15: reboiler of second ammonia purification tower

## Claims

1. A method for recovering ammonia, the method comprising:
step S1 of providing a mixed gas including ammonia;
step S2 of dissolving ammonia in water;
step S3 of degassing ammonia water in which ammonia is dissolved and separating water and ammonia gas from each other; and
step S4 of purifying degassed ammonia.

2. The method of claim 1, wherein the step S1 further includes a step of cooling provided mixed gas at 5°C to 80°C.

3. The method of claim 1, wherein the step S2 is performed by spraying water countercurrently to a flow of mixed gas.

4. The method of claim 3, wherein the sprayed water has a temperature of 5 to 45°C.

5. The method of claim 1, wherein the step S4 includes a primary purification step and a secondary purification step.

6. The method of claim 5, wherein the primary purification step further includes:
a step of cooling ammonia gas;
a step of removing residual impurities gas in a gaseous state; and
a step of re-heating ammonia gas from which residual impurities gas is removed.

7. The method of claim 6, wherein a step of cooling an ammonia gas added during the primary purification step is carried out at a temperature of 0°C to 5°C and a pressure of 1 kg/cm² to 20 kg/cm².

8. The method of claim 5, wherein the secondary purification step further includes:
a step of cooling ammonia gas;
a step of removing liquid residue; and
a step of re-heating the ammonia gas from which residue is removed.

9. The method of claim 8, wherein the secondary purification step is carried out at a temperature of -35°C to 0°C and a pressure of 1 bar to 20 bar.

10. An ammonia recovery device, comprising:
a mixed gas cooler 1; an ammonia absorption tower 2; an absorption liquid supply pump 3; an absorption liquid cooler 4; an absorption liquid degassing tower 5; a cooler 6 of a degassing tower; a reboiler 7 of the degassing tower; a cooler 8 on an upper end and a rear end of the degassing tower; a cooler 9 on a lower end and a rear end of the degassing tower; a first ammonia purification tower 10; a cooler 11 of the first ammonia purification tower; a reboiler 12 of the first ammonia purification tower; a second ammonia purification tower 13; a cooler 14 of the second ammonia purification tower; and a reboiler of a second ammonia purification tower 15.
